# EUROPÄISCHE PATENTANMELDUNG

(11) **EP 3 629 550 A1**
(43) Veröffentlichungstag der Anmeldung: **01.04.2020**
(21) Anmeldenummer: 18197133.4
(22) Anmeldetag: 27.09.2018
(51) Int. Cl.: H04L 29/08, H04L 12/46, H04L 1/18, H04L 12/931

(54) **VERFAHREN ZUR DATENÜBERMITTLUNG INNERHALB EINES INDUSTRIELLEN KOMMUNIKATIONSNETZES UND KOPPEL-KOMMUNIKATIONSGERÄT**

(71) Anmelder: Siemens Aktiengesellschaft, 80333 München (DE)
(72) Erfinder: Biehler, Georg, 90453 Nürnberg (DE); Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Zur Datenübermittlung innerhalb eines industriellen Kommunikationsnetzes, das in zumindest zwei Netz-Segmente (100, 200) unterteilt ist, sind zwei direkt miteinander gekoppelte Netz-Segmente (100, 200) über zumindest zwei zueinander redundante Koppelstrecken (1, 2) miteinander verbunden. Ein Ausfall von Übertragungsstrecken zwischen Netzknoten und/oder Datagramme weiterleitenden Kommunikationsgeräten (101-108; 201-208) an Netzknoten wird innerhalb jedes Netz-Segments unabhängig von anderen Netz-Segmenten entsprechend einem für das jeweilige Netz-Segment ausgewählten Fehlerbehandlungsprotokoll zur Nutzung redundanter Pfade behandelt. Nur ausgewählte, redundant von einem ersten Netz-Segment (100) in ein zweites Netz-Segment (200) zu übermittelnde Datagramme (500) werden unter Einfügung einer Sequenznummer dupliziert und über zwei Koppelstrecken (1, 2) in das zweite Netz-Segment übermittelt. Koppel-Kommunikationsgerät (201-202) des zweiten Netz-Segments identifizieren Duplikate von über eine der beiden Koppelstrecken (1, 2) bereits korrekt empfangenen Datagrammen (501, 502) anhand der Sequenznummer und verwerfen diese gegebenenfalls.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Multicast-Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Multicast-Datenströme oder Datenrahmen mit Echtzeitanforderungen nicht entsprechend einer angeforderten bzw. benötigten Dienstgüte übermittelt werden.

Um Ausfälle von Übertagungsstrecken zwischen Netzknoten oder von Kommunikationsgeräten an Netzknoten kompensieren zu können, sind Kommunikationsprotokolle, wie Media Redundancy Protocol, High-availability Seamless Redundancy oder Parallel Redundancy Protocol, für hochverfügbare, redundant betreibbare industrielle Kommunikationsnetze entwickelt worden. Media Redundancy Protocol (MSR) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Entsprechend Media Redundancy Protocol ist einem Switch mit zwei Ports innerhalb der Ringtopologie ein Redundanz-Manager zugeordnet, der das Netz auf Verbindungsausfälle überwacht und ggf. eine Schaltmaßnahme für einen Ringschluss einleitet.

Stoßbehaftete Medienredundanzverfahren lassen sich grundsätzlich mit relativ geringem Aufwand realisieren. Nachteilig ist jedoch, dass einerseits Nachrichten im Fehlerfall verloren gehen können und andererseits während einer Rekonfiguration eines Kommunikationsnetzes zunächst ein Störungszustand vorliegt. Ein derartiger Störungszustand muss durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten dar. Bei Media Redundancy Planned Duplication handelt es sich jedoch nicht um ein anwendungsneutrales stoßfreies Medienredundanzverfahren, sondern um eine PROFINETspezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Nachrichten mit äußerst geringen Erholungszeiten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Aus EP 2 661 023 B1 ist ein Kommunikationsgerät für ein redundant betreibbares industrielles Kommunikationsnetz bekannt, das eine erste und zweite Sende- und Empfangseinheit umfasst, die Datenpakete innerhalb des industriellen Kommunikationsnetzes wahlweise stoßbehaftet oder stoßfrei übermitteln und selektiv in einen stoßbehafteten oder stoßfreien Übermittlungsmodus umschaltbar sind. Mit der ersten bzw. zweiten Sende- und Empfangseinheit ist eine Auswerteeinheit verbunden ist, die stoßbehaftet oder stoßfrei innerhalb des industriellen Kommunikationsnetzes zu übermittelnde Datenpakete detektiert. Bei Detektion eines stoßbehaftet zu übermittelnden Datenpakets werden eine Redundanzbehandlungseinheit und eine Filtereinheit für empfangene redundante Datenpakete deaktiviert. Der ersten bzw. zweiten Sende- und Empfangseinheit ist eine Speichereinheit zugeordnet, die im stoßbehafteten Übermittlungsmodus zumindest ein stoßbehaftet zu übermittelndes Datenpaket während einer vorgegebenen Zeitdauer puffert.

Zur Nachrichtenübermittlung in einem redundant betreibbaren industriellen Kommunikationsnetz mit zumindest einem ersten und einem zweiten Teilnetz mit Ringtopologie, die über eine Teilnetz-Kopplung miteinander verbunden sind, wählen Koppel-Kommunikationsgeräte entsprechend EP 2 854 345 B1 anhand eines ihnen jeweils zugeordneten Prioritätskennwerts untereinander ein Koppel-Kommunikationsgerät aus, dessen Kopplungssteuerungseinheit aktiviert wird. Die anderen Koppel-Kommunikationsgeräte deaktivieren dagegen ihre Kopplungssteuerungseinheit. Ein erstes Koppel-Kommunikationsgerät des ersten Teilnetzes und ein erstes Koppel-Kommunikationsgerät des zweiten Teilnetzes tauschen untereinander Test-Nachrichten zur Detektion einer Unterbrechung zwischen den beiden ersten Koppel-Kommunikationsgeräten aus, während ein zweites Koppel-Kommunikationsgerät des ersten Teilnetzes und ein zweites Koppel-Kommunikationsgerät des zweiten Teilnetzes untereinander Test-Nachrichten zur Detektion einer Unterbrechung zwischen den beiden zweiten Koppel-Kommunikationsgeräten austauschen.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In der älteren internationalen Patentanmeldung PCT/EP2017/ 066175 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressoucenreservierung vorgenommen.

Der vorliegenden Erfindung liegt die Aufgabe zugrunde, ein Verfahren zur fehlergesicherten Datenübermittlung zwischen Netz-Segmenten eines industriellen Kommunikationsnetzes zu schaffen, das eine priorisierte Übermittlung ausgewählter Datagramme ermöglicht und nur geringe Aufwände zur Konfiguration von durch die Netz-Segmente umfassten Kommunikationsgeräten erfordert, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Koppel-Kommunikationsgerät mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur Datenübermittlung innerhalb eines industriellen Kommunikationsnetzes, das in zumindest zwei Netz-Segmente unterteilt ist, wird ein Ausfall von Übertragungsstecken zwischen Netzknoten bzw. Datagramme weiterleitenden Kommunikationsgeräten an Netzknoten innerhalb jedes Netz-Segments unabhängig von anderen Netz-Segmenten entsprechend einem für das jeweilige Netz-Segment ausgewählten Fehlerbehandlungsprotokoll zur Nutzung redundanter Pfade behandelt. Dabei sind zwei direkt miteinander gekoppelte Netz-Segmente über zumindest zwei zueinander redundante Koppelstecken miteinander verbunden. Vorzugsweise sind das erste und das zweite Netz-Segment von einem Time-sensitive Network, insbesondere entsprechend IEEE 802.1 Q und IEEE 802.1 Qbv, umfasst.

Datagramme können im ersten bzw. im zweiten Netz-Segment beispielsweise entsprechend Media Redundancy Protocol (MRP), Media Redundancy Planned Duplication (MRPD), High Availability Seamless Redundancy (HSR), Parallel Redundancy Protocol (PRP), Spanning Tree Protocol (STP) bzw. Rapid Spanning Tree Protocol (RSTP) als ausgewähltem Fehlerbehandlungsprotokoll übermittelt werden, während die Koppel-Kommunikationsgeräte entsprechend IEEE 802.1 CB betrieben werden können. Insbesondere kann für das erste Netz-Segment ein anderes Fehlerbehandlungsprotokoll als für das zweite Netz-Segment ausgewählt sein.

Erfindungsgemäß werden nur ausgewählte, redundant von einem ersten Netz-Segment in ein zweites Netz-Segment zu übermittelnde Datagramme unter Einfügung einer Sequenznummer dupliziert und über eine erste sowie über eine zweite Koppelstrecke in das zweite Netz-Segment übermittelt. Dabei verbindet die erste Koppelstrecke jeweils ein erstes Koppel-Kommunikationsgerät des ersten und des zweiten Netz-Segments miteinander, während die zweite Koppelstrecke jeweils ein zweites Koppel-Kommunikationsgerät des ersten und des zweiten Netz-Segments miteinander verbindet. Das erste bzw. das zweite Koppel-Kommunikationsgerät des zweiten Netz-Segments identifizieren Duplikate von über eine der beiden Koppelstecken bereits korrekt empfangenen Datagrammen anhand der Sequenznummer und verwerfen diese gegebenenfalls.

Durch Aufteilung des Kommunikationsnetzes in Netz-Segmente mit voneinander unabhängig ausgestalteten und genutzten Redundanzprotokollen kann pro Netz-Segment ein Ausfall einer Übertragungsstecke bzw. eines Netzknotens kompensiert werden. Insbesondere ist es nicht erforderlich, dass sämtliche weiterleitenden Kommunikationsgeräte innerhalb der Netz-Segmente zur Anwendung eines Redundanzprotokolls ausgestaltet und konfiguriert sind. Im Vergleich beispielsweise zu High-availability Seamless Redundancy (HSR) ergibt sich eine deutlich weniger aufwendige Realisierung von Fehlerbehandlungsmaßnahmen, da auf eine Übermittlung von Datagrammen in beide Richtungen innerhalb einer Ring-Topologie und auf eine zur Duplikatefilterung erforderliche Speicherung von Sequenznummern für sämtliche weitergeleiteten Datagramme verzichtet werden kann.

Entsprechend einer besonders bevorzugten Ausgestaltung der vorliegenden Erfindung werden dem -Datenströmen zugeordnete Datagramme innerhalb vorgegebener Zeitintervalle über weiterleitende Kommunikationsgeräte umfassende Pfade übermittelt. Dabei werden die vorgegebenen Zeitintervalle zumindest in allen weiterleitenden Kommunikationsgeräten des ersten und des zweiten Netz-Segments synchronisiert. Insbesondere werden Multicast-Datenströme zwischen Kommunikationsgeräten im ersten Netz-Segment und Kommunikationsgeräten im zweiten Netz-Segment redundant über beide Koppelstecken übermittelt. Vorzugsweise werden zur Übermittlung der Multicast-Datenströme Time-aware Shaper gemäß IEEE 802.1 Qbv verwendet.

Den Multicast-Datenströmen zugeordnete Quell-Kommunikationsgeräte spezifizieren zur Reservierung von durch weiterleitende Kommunikationsgeräte bereitzustellenden Ressourcen entsprechend einer weiteren bevorzugten Ausgestaltung jeweils Dienstgüteparameter für die Multicast-Datenströme. Für eine Reservierungsanfrage spezifizieren Multicast-Datenströmen zugeordnete Ziel-Kommunikationsgeräte jeweils einen Multicast-Datenstrom-Identifikator. Den Quell-Kommunikationsendgeräten kann beispielsweise jeweils eine Talker-Funktion zugeordnet sein, während den Ziel-Kommunikationsendgeräten jeweils eine Listener-Funktion zugeordnet sein kann.

Vorteilhafterweise überprüfen die weiterleitenden Kommunikationsgeräte bzw. eine übergeordnete Steuerungseinrichtung bei einer Reservierungsanfrage jeweils, ob in den weiterleitenden Kommunikationsgeräten entlang des jeweiligen Pfades ausreichende Ressourcen zur Datenübermittlung unter Einhaltung der spezifizierten Dienstgüteparameter verfügbar sind. Die durch die weiterleitenden Kommunikationsgeräte bereitzustellenden Ressourcen umfassen beispielsweise Bandbreite, Queue-Anzahl, Queue-Cache bzw. Adress-Cache des jeweiligen weiterleitenden Kommunikationsgeräts. Bei ausreichenden Ressourcen wird jeweils eine dem spezifizierten Multicast-Datenstrom-Identifikator zugeordnete Multicast-Adresse an ein anfragendes Ziel-Kommunikationsendgerät übermittelt. Vorzugsweise werden die Reservierungsanfragen entsprechend IEEE 802.1Qcc behandelt. Auf diese Weise Die lässt sich eine gezielte redundante Datenübermittlung ausgewählter Datagramme zuverlässig und effizient mit Verfahren zur Stream-Reservierung kombinieren.

Das erfindungsgemäße Koppel-Kommunikationsgerät ist zur Durchführung des Verfahrens entsprechend vorangehenden Ausführungen geeignet und umfasst mehrere Anschlüssen zur Verbindung mit weiteren Kommunikationsgeräten eines in zumindest zwei Netz-Segmente unterteilten Kommunikationsnetzes sowie ein Koppelelement, durch das die Anschlüsse schaltbar miteinander verbindbar sind. Das Koppel-Kommunikationsgerät ist dafür ausgestaltet und eingerichtet, zwei direkt miteinander gekoppelte Netz-Segmente über eine von zumindest zwei zueinander redundante Koppelstecken miteinander zu verbinden und einen Ausfall von Übertragungsstecken zwischen Netzknoten bzw. von Datagramme weiterleitenden Kommunikationsgeräten an Netzknoten innerhalb eines dem Koppel-Kommunikationsgerät zugeordneten Netz-Segments unabhängig von anderen Netz-Segmenten entsprechend einem für das zugeordnete Netz-Segment ausgewählten Fehlerbehandlungsprotokoll zur Nutzung redundanter Pfade zu behandeln.

Erfindungsgemäß ist das Koppel-Kommunikationsgerät ist dafür ausgestaltet und eingerichtet, nur ausgewählte, redundant vom zugeordneten Netz-Segment in ein direkt gekoppeltes Netz-Segment zu übermittelnde Datagramme unter Einfügung einer Sequenznummer dupliziert und über eine erste sowie über eine zweite Koppelstrecke in das direkt gekoppelte Netz-Segment zu übermitteln. Dabei verbindet die erste Koppelstrecke jeweils ein erstes Koppel-Kommunikationsgerät des zugeordneten und des direkt gekoppelten Netz-Segments miteinander, während die zweite Koppelstrecke jeweils ein zweites Koppel-Kommunikationsgerät des ersten und des zweiten Netz-Segments miteinander verbindet. Darüber hinaus ist dafür ausgestaltet und eingerichtet, Duplikate von über eine der beiden Koppelstecken bereits korrekt empfangenen Datagrammen anhand der Sequenznummer zu identifizieren und zu verwerfen.

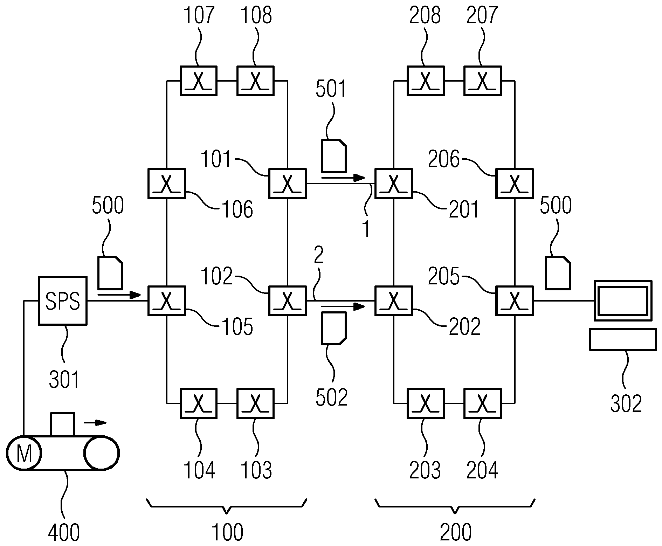

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz eines industriellen Automatisierungssystems mit zwei Netz-Segmenten.

Das in Figur 1 dargestellte Kommunikationsnetz eines industriellen Automatisierungssystems umfasst zwei Netz-Segmente 100, 200 mit jeweils mehreren Kommunikationsgeräten 101-108, 201-208. Die Kommunikationsgeräte 101-108, 201-208 können beispielsweise Bridges, Switches oder Router sein und zum Anschluss von speicherprogrammierbaren Steuerungen 301, Eingabe/Ausgabe-Einheiten (I/O-Module) oder Bedien- und Beobachtungsstationen 302 des industriellen Automatisierungssystems dienen. Im vorliegenden Ausführungsbeispiel ist das die Kommunikationsgeräte 101-108, 201-208 umfassende Kommunikationsnetz als Time-sensitive Network entsprechend IEEE 802.1 Q und IEEE 802.1 Qbv, ausgestaltet. Die beidem direkt miteinander gekoppelten Netz-Segmente 100, 200 sind im vorliegenden Ausführungsbeispiel über zwei zueinander redundante Koppelstecken 1, 2 miteinander verbunden.

Speicherprogrammierbare Steuerungen 301 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 301 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Ein Ausfall von Übertragungsstecken zwischen Netzknoten bzw. Datagramme weiterleitenden Kommunikationsgeräten 101-108, 201-208 an Netzknoten wird innerhalb jedes Netz-Segments 100, 200 unabhängig von anderen Netz-Segmenten entsprechend einem für das jeweilige Netz-Segment 100, 200 ausgewählten Fehlerbehandlungsprotokoll zur Nutzung redundanter Pfade behandelt. Beispielsweise können Datagramme, wie Datensegmente, Datenpakete oder Datenrahmen (Frames), im jeweiligen Netz-Segment 100, 200 entsprechend Media Redundancy Protocol (MRP), Media Redundancy Planned Duplication (MRPD), High Availability Seamless Redundancy (HSR), Parallel Redundancy Protocol (PRP), Spanning Tree Protocol (STP) bzw. Rapid Spanning Tree Protocol (RSTP) als ausgewähltem Fehlerbehandlungsprotokoll übermittelt werden. Insbesondere können dabei für die beiden Netz-Segmente 100, 200 unterschiedliche Fehlerbehandlungsprotokolle ausgewählt werden.

Mittels erster Automatisierungsgeräte, die an Quell-Netzknoten angeschlossene Kommunikationsendgeräte darstellen und eine Talker-Funktion haben, werden Informationen bzw. Dienste über Multicast-Datenströme zur Nutzung an zweiten Automatisierungsgeräten bereitgestellt, die an Ziel-Netzknoten angeschlossene Kommunikationsendgeräte darstellen und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 301 eine Talker-Funktion, während die Bedien- und Beobachtungsstation 302 eine Listener-Funktion aufweist und insbesondere durch die speicherprogrammierbare Steuerung 301 bereitgestellte Informationen empfängt. Grundsätzlich könnte die Bedien- und Beobachtungsstation 302 von der speicherprogrammierbaren Steuerung 301 empfangene Informationen analysieren und hieraus Steuerungsparameter für die speicherprogrammierbare Steuerung 301 vorgeben. Somit würden sowohl die speicherprogrammierbare Steuerung 301 als auch die Bedien- und Beobachtungsstation 302 beide Funktionen wahrnehmen. Im Sinn einer vereinfachten Darstellung wird nachfolgend davon ausgegangen, dass beide Geräte jeweils nur eine zugeordnete Funktion aufweisen.

Nur ausgewählte, redundant von einem ersten Netz-Segment 100 in ein zweites Netz-Segment 200 zu übermittelnde Datagramme werden unter Einfügung einer Sequenznummer dupliziert und dementsprechend als Original 501 sowie als Duplikat 502 über eine erste 1 sowie über eine zweite Koppelstrecke 2 in das zweite Netz-Segment 200 übermittelt. Für ausgewählte, redundant vom zweiten Netz-Segment 200 in das erste Netz-Segment 100 zu übermittelnde Datagramme gilt dies in entsprechender Weise, ebenso wie nachfolgende Ausführungen. Während die erste Koppelstrecke 1 jeweils ein erstes Koppel-Kommunikationsgerät 101, 201 des ersten und des zweiten Netz-Segments miteinander verbindet, werden durch die zweite Koppelstrecke 2 jeweils ein zweites Koppel-Kommunikationsgerät 102, 202 des ersten und des zweiten Netz-Segments miteinander verbunden.

Im vorliegenden Ausführungsbeispiel stellen Datagramme 500, die Multicast-Datenströmen von der speicherprogrammierbaren Steuerung 301 zur Bedien- und Beobachtungsstation 302 zugeordnet sind, ausgewählte, redundant vom ersten Netz-Segment 100 in das zweite Netz-Segment 200 zu übermittelnde Datagramme dar. Das erste 201 und das zweite Koppel-Kommunikationsgerät 202 des zweiten Netz-Segments 200 identifizieren Duplikate von über eine der beiden Koppelstecken 1, 2 bereits korrekt innerhalb eines definierten Zeitfensters empfangenen Datagrammen 501, 502 anhand der Sequenznummer und verwerfen diese gegebenenfalls. Vorzugsweise werden die Koppel-Kommunikationsgeräte 101-102, 201-202 hierfür entsprechend IEEE 802.1 CB ("Frame Replication and Elimination for Redundancy") betrieben. IEEE 802.1CB ermöglicht insbesondere, nur Teile eines Pfades redundant auszulegen.

Multicast-Datenströmen zugeordnete Datagramme werden innerhalb vorgegebener Zeitintervalle über weiterleitende Kommunikationsgeräte 101-108, 201-208 umfassende Pfade übermittelt. Dabei werden die vorgegebenen Zeitintervalle vorzugsweise in allen weiterleitenden Kommunikationsgeräten 101-108, 201-208 des ersten 100 und des zweiten Netz-Segments 200 synchronisiert. Zur Übermittlung der Multicast-Datenströme werden vorteilhafterweise Time-aware Shaper gemäß IEEE 802.1 Qbv verwendet.

Zur Reservierung von durch weiterleitende Kommunikationsgeräte 101-108, 201-208 für Multicast-Datenströme bereitzustellenden Ressourcen spezifizieren den Multicast-Datenströmen zugeordnete Quell-Kommunikationsgeräte 301 vorzugsweise jeweils Dienstgüteparameter. Für eine Reservierungsanfrage spezifizieren den Multicast-Datenströmen zugeordnete Ziel-Kommunikationsgeräte 302 jeweils einen Multicast-Datenstrom-Identifikator. Bei einer Reservierungsanfrage überprüfen die weiterleitenden Kommunikationsgeräte 101-108, 201-208 bzw. eine übergeordnete Steuerungseinrichtung jeweils, ob in den weiterleitenden Kommunikationsgeräten 101-108, 201-208 entlang des jeweiligen Pfades ausreichende Ressourcen zur Datenübermittlung unter Einhaltung der spezifizierten Dienstgüteparameter verfügbar sind. Die durch die weiterleitenden Kommunikationsgeräte 101-108, 201-208 bereitzustellenden bzw. bereitgestellten Ressourcen umfassen beispielsweise Bandbreite, Queue-Anzahl, Queue-Cache bzw. Adress-Cache des jeweiligen dritten Kommunikationsgeräts. Bei ausreichenden Ressourcen wird jeweils eine dem spezifizierten Multicast-Datenstrom-Identifikator zugeordnete Multicast-Adresse an ein anfragendes Ziel-Kommunikationsendgerät 302 übermittelt. Im vorliegenden Ausführungsbeispiel werden die Reservierungsanfragen entsprechend IEEE 802.1Qcc behandelt.

## Patentansprüche

1. Verfahren zur Datenübermittlung innerhalb eines industriellen Kommunikationsnetzes, bei dem
- das Kommunikationsnetz in zumindest zwei Netz-Segmente (100, 200) unterteilt ist,
- bei dem zwei direkt miteinander gekoppelte Netz-Segmente (100, 200) über zumindest zwei zueinander redundante Koppelstecken (1, 2) miteinander verbunden sind,
- ein Ausfall von Übertragungsstecken zwischen Netzknoten und/oder Datagramme weiterleitenden Kommunikationsgeräten (101-108; 201-208) an Netzknoten innerhalb jedes Netz-Segments unabhängig von anderen Netz-Segmenten entsprechend einem für das jeweilige Netz-Segment ausgewählten Fehlerbehandlungsprotokoll zur Nutzung redundanter Pfade behandelt wird,
- nur ausgewählte, redundant von einem ersten Netz-Segment (100) in ein zweites Netz-Segment (200) zu übermittelnde Datagramme (500) unter Einfügung einer Sequenznummer dupliziert und über eine erste (1) sowie über eine zweite Koppelstrecke (2) in das zweite Netz-Segment übermittelt werden,
- wobei die erste Koppelstrecke (1) jeweils ein erstes Koppel-Kommunikationsgerät (101; 201) des ersten und des zweiten Netz-Segments miteinander verbindet und
- wobei die zweite Koppelstrecke (2) jeweils ein zweites Koppel-Kommunikationsgerät (102; 202) des ersten und des zweiten Netz-Segments miteinander verbindet,
- das erste und/oder das zweite Koppel-Kommunikationsgerät (201-202) des zweiten Netz-Segments Duplikate von über eine der beiden Koppelstecken (1, 2) bereits korrekt empfangenen Datagrammen (501, 502) anhand der Sequenznummer identifizieren und verwerfen.

2. Verfahren nach Anspruch 1,
bei dem Multicast-Datenströmen zugeordnete Datagramme innerhalb vorgegebener Zeitintervalle über weiterleitende Kommunikationsgeräte umfassende Pfade übermittelt werden, bei dem die vorgegebenen Zeitintervalle zumindest in allen weiterleitenden Kommunikationsgeräten des ersten und des zweiten Netz-Segments synchronisiert werden und bei dem Multicast-Datenströme zwischen Kommunikationsgeräten im ersten Netz-Segment und Kommunikationsgeräten im zweiten Netz-Segment redundant über beide Koppelstecken übermittelt werden.

3. Verfahren nach Anspruch 2,
bei dem zur Übermittlung der Multicast-Datenströme Time-aware Shaper gemäß IEEE 802.1 Qbv verwendet werden.

4. Verfahren nach einem der Ansprüche 2 oder 3,
bei dem den Multicast-Datenströmen zugeordnete Quell-Kommunikationsgeräte zur Reservierung von durch weiterleitende Kommunikationsgeräte bereitzustellenden Ressourcen jeweils Dienstgüteparameter für die Multicast-Datenströme spezifizieren, bei dem den Multicast-Datenströmen zugeordnete Ziel-Kommunikationsgeräte für eine Reservierungsanfrage jeweils einen Multicast-Datenstrom-Identifikator spezifizieren und bei dem die weiterleitenden Kommunikationsgeräte und/oder eine übergeordnete Steuerungseinrichtung bei einer Reservierungsanfrage jeweils überprüfen, ob in den weiterleitenden Kommunikationsgeräten entlang des jeweiligen Pfades ausreichende Ressourcen zur Datenübermittlung unter Einhaltung der spezifizierten Dienstgüteparameter verfügbar sind.

5. Verfahren nach Anspruch 4,
bei dem bei ausreichenden Ressourcen jeweils eine dem spezifizierten Multicast-Datenstrom-Identifikator zugeordnete Multicast-Adresse an ein anfragendes Ziel-Kommunikationsendgerät übermittelt wird.

6. Verfahren nach einem der Ansprüche 4 oder 5,
bei dem die durch die weiterleitenden Kommunikationsgeräte bereitzustellenden Ressourcen Bandbreite, Queue-Anzahl, Queue-Cache und/oder Adress-Cache des jeweiligen weiterleitenden Kommunikationsgeräts umfassen.

7. Verfahren nach einem der Ansprüche 4 bis 6,
bei dem die Reservierungsanfragen entsprechend IEEE 802.1Qcc behandelt werden.

8. Verfahren nach einem der Ansprüche 4 bis 7,
bei dem den Quell-Kommunikationsendgeräten jeweils eine Talker-Funktion zugeordnet ist und bei dem den Ziel-Kommunikationsendgeräten jeweils eine Listener-Funktion zugeordnet ist.

9. Verfahren nach einem der Ansprüche 1 bis 8,
bei dem das erste und das zweite Netz-Segment von einem Time-sensitive Network, insbesondere entsprechend IEEE 802.1 Q und IEEE 802.1 Qbv, umfasst sind.

10. Verfahren nach einem der Ansprüche 1 bis 9,
bei dem Datagramme im ersten und/oder im zweiten Netz-Segment entsprechend Media Redundancy Protocol, Media Redundancy Planned Duplication, High Availability Seamless Redundancy, Parallel Redundancy Protocol, Spanning Tree Protocol und/oder Rapid Spanning Tree Protocol als ausgewähltem Fehlerbehandlungsprotokoll übermittelt werden und bei dem die Koppel-Kommunikationsgeräte entsprechend IEEE 802.1 CB betrieben werden.

11. Verfahren nach Anspruch 10,
bei dem für das erste Netz-Segment ein anderes Fehlerbehandlungsprotokoll als für das zweite Netz-Segment ausgewählt ist.

12. Koppel-Kommunikationsgerät zur Durchführung des Verfahrens nach einem der Ansprüche 1 bis 11 mit
- mehreren Anschlüssen zur Verbindung mit weiteren Kommunikationsgeräten eines in zumindest zwei Netz-Segmente unterteilten Kommunikationsnetzes,
- einem Koppelelement, durch das die Anschlüsse schaltbar miteinander verbindbar sind,
- wobei das Koppel-Kommunikationsgerät dafür ausgestaltet und eingerichtet ist, zwei direkt miteinander gekoppelte Netz-Segmente über eine von zumindest zwei zueinander redundante Koppelstecken miteinander zu verbinden,
- einen Ausfall von Übertragungsstecken zwischen Netzknoten und/oder Datagramme weiterleitenden Kommunikationsgeräten an Netzknoten innerhalb eines dem Koppel-Kommunikationsgerät zugeordneten Netz-Segments unabhängig von anderen Netz-Segmenten entsprechend einem für das zugeordnete Netz-Segment ausgewählten Fehlerbehandlungsprotokoll zur Nutzung redundanter Pfade zu behandeln,
- nur ausgewählte, redundant vom zugeordneten Netz-Segment in ein direkt gekoppeltes Netz-Segment zu übermittelnde Datagramme unter Einfügung einer Sequenznummer dupliziert und über eine erste sowie über eine zweite Koppelstrecke in das direkt gekoppelte Netz-Segment zu übermitteln,
- wobei die erste Koppelstrecke jeweils ein erstes Koppel-Kommunikationsgerät des zugeordneten und des direkt gekoppelten Netz-Segments miteinander verbindet und
- wobei die zweite Koppelstrecke jeweils ein zweites Koppel-Kommunikationsgerät des ersten und des zweiten Netz-Segments miteinander verbindet,
- Duplikate von über eine der beiden Koppelstecken bereits korrekt empfangenen Datagrammen anhand der Sequenznummer zu identifizieren und zu verwerfen.
